# EUROPEAN PATENT APPLICATION

(11) **EP 0 669 476 A1**
(43) Date of publication of application: **30.08.1995**
(21) Application number: 94309431.8
(22) Date of filing: 16.12.1994
(51) Int. Cl.: F16D 3/84, F16J 3/04

(54) **Protective bellows**

(30) Priority: 24.02.1994 GB 9403588
(71) Applicant: DRAFTEX INDUSTRIES LIMITED, Edinburgh EH3 6YY, Scotland (GB)
(72) Inventor: Breheret, Joel, F-44119 Treillieres (FR)
(74) Representative: Foster, David Martyn

(57) **Abstract**

A protective bellows for protecting the steering mechanism of a motor vehicle has a fixing collar (26) for fitting in a groove extending around the end of a casing of the steering mechanism. The bellows is moulded from thermoplastic material and the fixing collar (26) is arranged to have an internal diameter which is slightly greater than the external diameter of the mounting groove. The fitting process therefore does not require the fixing collar to be stretched in order to enable it to be fitted into the groove. The fixing collar (26) is held in position by an encircling clamp. The fixing collar (26) has grooves (32,34), or similar formations, to provide spaces for accommodating the excess material when the fixing collar (26) is compressed by the clamping ring, thus preventing folds developing in the material.

## Description

The invention relates to a protective bellows made from thermoplastic elastomeric material and having an integral fixing collar adapted to be clamped onto and around the outside of a circumferentially extending relatively rigid mounting surface by clamping means which encircles the collar when positioned on the mounting surface and secures it thereto by compression.

Such a bellows is known from US-A-4 560 178. In this known form of bellows, the fixing collar has a non-circular internal surface, the internal surface being made up of integrally connected flats. These flats bend relatively to each other when the fixing collar is placed around the mounting surface and make tangential contact with that surface. The flats and their ability to bend relative to each other enable the fixing collar to be made from relatively hard material and yet to be easily fittable. However, because the flats only make tangential contact with the mounting surface, adequate sealing may not be possible without the use of an additional sealing compound. The invention in one of its aspects aims to overcome this problem.

In accordance with this aspect of the invention, the known form of bellows is characterised in that the fixing collar has a circular internal surface the internal diameter of which is greater than the external diameter of the mounting surface.

In another of its aspects, the invention relates to a protective bellows moulded from thermoplastic elastomeric material and having an integral fixing collar for fitting onto and around the outside of a relatively rigid circumferentially extending mounting surface having an edge defined by a circumferentially extending shoulder of greater external diameter than the mounting surface, and a clamping ring for encirclingly and compressingly holding the fixing collar on the mounting surface.

Such a form of bellows is known from GB-A-1 397 515. In order to fit the fixing collar onto the mounting surface, the fixing collar has to pass over the greater diameter of the retaining shoulder and to become axially aligned with the mounting surface. Thereafter, the clamping ring is positioned around the fixing collar to compress it into position on the mounting surface. However, if fitting takes place slightly incorrectly, the fixing collar may not become properly aligned with the mounting surface and may, for example, be positioned at least partly over the retaining shoulder. If the clamping ring is then positioned around and compresses the fixing collar, the fixing collar will become clamped into this incorrect axial position. The invention in its other aspect aims to deal with this problem.

In accordance with this other aspect in the invention, therefore, the second above-mentioned known form of bellows is characterised in that the clamping ring is settable into either of two stable conditions in which it respectively has different internal diameters, a first one of the conditions providing an internal diameter for the clamping ring such as to allow it and the fixing collar to pass over the shoulder and into position around the mounting surface, and the second one of the conditions providing the clamping ring with an internal diameter which compresses the fixing collar around the mounting surface, the internal diameter of the clamping ring in the second condition being too small to enable the fixing collar to be incorrectly compressed around the said shoulder.

Forms of protective bellows embodying the invention will now be described, by way of example only, with reference to the accompanying diagrammatic drawings in which:
Figure 1 is a side view, partly in section, showing a general view of a protective bellows for protecting the steering mechanism of a vehicle;
Figure 2 is an enlarged half-cross section of part of the steering mechanism and also showing the end of part of a known form of protective bellows about to be mounted in position;
Figure 3 corresponds to Figure 2 but shows part of a protective bellows embodying the invention about to be mounted in position;
Figure 4 corresponds to Figure 3, showing the bellows at an intermediate stage in the mounting process;
Figure 5 corresponds to Figures 3 and 4 and shows the bellows correctly mounted;
Figure 6 is an enlarged view, partly in cross- section, of one form of fixing collar of a protective bellows embodying the invention;
Figure 7 corresponds to Figure 6 but shows a modified form for the collar;
Figure 8 is an enlarged cross-sectional view of part of a collar of a bellows embodying the invention, showing another possible form; and
Figure 9 corresponds to Figure 8 and shows a further modification.

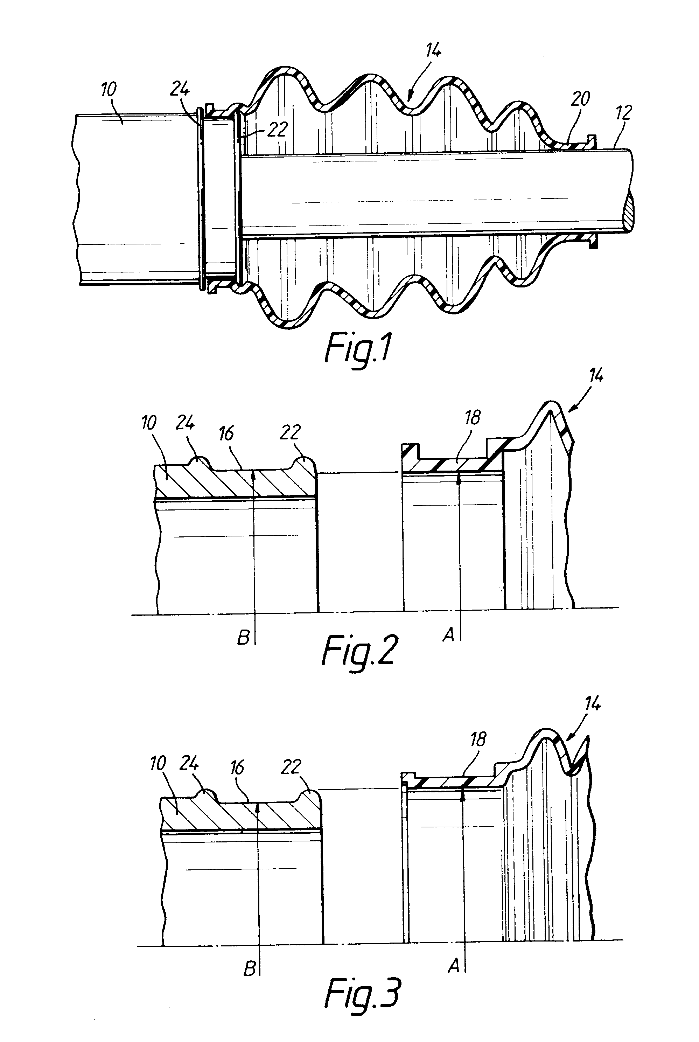

Figure 1 shows the casing 10 of part of the steering mechanism of a motor vehicle body. A steering rod 12 extends from the end of the casing 10 and is moved to and fro in a longitudinal direction by the steering mechanism. The rod is linked to one of the front wheels of the vehicle so as to alter its angle. A similar rod extends from the other end of the casing and is linked to the other road wheel.

In order to protect the steering mechanism, a protective bellows 14 is fitted over the end of the casing 10 and its other end is attached to the rod 12. As indicated in Figure 1, the end of the casing 10 is provided with a groove 16 which receives a fixing collar 18 forming one end of the bellows 14. The bellows has a fixing collar 20 at its opposite end which is fitted to the steering rod 12. The bellows thus protects the steering mechanism, particularly where the steering rod 12 emerges from the end of the casing 10. The bellows is sufficiently flexible and resilient to accommodate the longitudinal movement of the steering rod 12. In order to provide proper protection for the steering mechanism, it is very important that the fixing collars be secured firmly and uniformly in position, so as to prevent the ingress of air or fumes or moisture.

The mounting surface 16 is defined between shoulders 22 and 24 which help to retain the fixing collar in position.

Figure 2 shows a known form of bellows 14 and illustrates how its fixing collar 18 is held securely on the mounting surface 16. The bellows 14 in Figure 2 may be made of Neoprene. It is designed so that the internal diameter A of its fixing collar 18 is slightly less than the external diameter B of the mounting surface 16. Therefore, the collar has to be stretched in order to increase its internal diameter sufficiently to enable the collar to pass over the shoulder 22 and then onto the mounting surface 16. The collar 18 is thus held on the mounting surface 16 by the resilience of the slightly stretched material. However, such an arrangement is unsatisfactory in that the fitting process is relatively difficult, necessitating stretching of the material. Furthermore, careless fitting may result in the fixing collar 18 not being correctly located in the mounting groove 16; for example, at the end of the fitting operation it may be positioned partly on the shoulder 22. In use, it may therefore slip off the casing 16.

Figure 3 corresponds to Figure 2 but shows the end of a protective bellows 14 embodying the invention and its fixing collar 18. The bellows is moulded from thermoplastic material. The fixing collar 18 in Figure 3 is shown only generally and will be described in greater detail below. In the protective bellows 14 of Figure 3, the internal diameter A of the fixing collar 18 is arranged to be greater than the external diameter B of the mounting surface 16. In fact, diameter A is substantially the same as the external diameter of the shoulder 22. Fitting is therefore easy: the fixing collar can simply be slid over the shoulder 22 without any stretching of the material being necessary. When the fixing collar is positioned over the mounting surface 16, it is then clamped in position by a suitable clamping ring (not shown in Figure 3) which encircles the external surface 26 of the fixing collar 18 and is then tightened (reducing its internal diameter) so as to clamp the fixing collar 18 tightly onto the mounting surface.

Suitable forms of clamping ring are known, such as clamping rings of type ""Caillau" or "Oetiker", or they may take the form disclosed in published European specification No. 0545629.

Advantageously, the clamping ring is of a type which has only two stable conditions: an unclamped condition in which its interior diameter has a maximum value and a clamped condition in which its internal diameter has a minimum value. It cannot maintain itself in a condition having an internal diameter between these two limits. Advantageously, therefore, the maximum and minimum internal diameter of the clamping ring are selected so that the clamping ring can only be moved into its clamping condition when the fixing collar 18 is correctly located on the mounting surface 16.

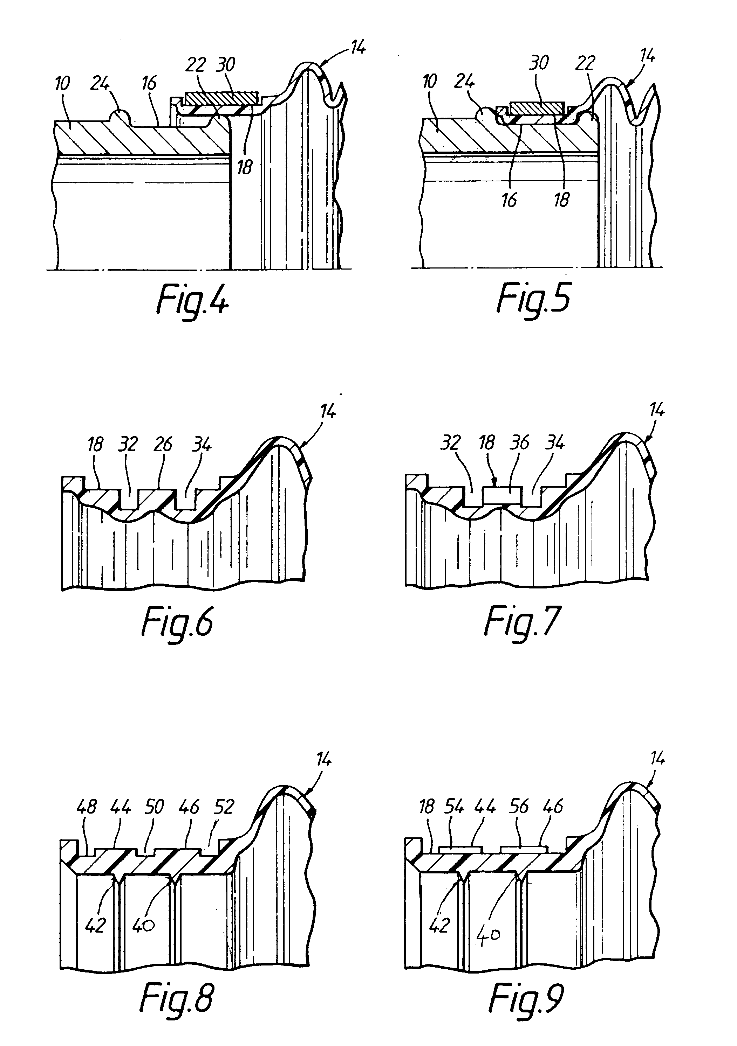

Figure 4 shows the fixing collar 18 incorrectly located: it is located on the retaining shoulder 22 instead of within the groove 16. Figure 4 shows the clamping ring 30 in position on the fixing collar 18. The clamping ring 30 is in its unclamped condition, thus having maximum internal diameter and allowing the fixing collar 18 to pass over the shoulder 22. However, it is not possible to move the clamping ring 30 into its clamping condition while the fixing collar is engaging the retaining shoulder 22 as indicated in Figure 4. This is because the external diameter of the retaining shoulder 22 is greater than the internal diameter of the clamping ring in its clamping condition. This therefore prevents incorrect fitting of the bellows onto the steering mechanism casing 10.

Figure 5 shows the fixing collar 18 correctly positioned on the mounting surface and with the clamping ring 30 in its clamping condition.

Because the internal diameter of the fixing collar 18 of the bellows embodying the invention is greater than the external diameter of the mounting surface 16, the material of the fixing collar will have to be compressed when the clamping ring 30 is moved into its clamping condition. Figures 3,4 and 5 show the fixing collar 18 only in general terms. Figures 6 - 9, which will now be described in detail, show various forms which the fixing collar can take in order to enable its material to be compressed by the clamping ring without risk of creating folds in the material which might have an adverse effect on the sealing efficiency.

Figure 6 shows how the surface 26 of the fixing collar 18 may be formed with circumferential grooves 32 and 34. Advantageously, the depth of each of these grooves is less than or equal to its width. The grooves 32 and 34 provide a space which can become occupied by the compressed material of the fixing collar 18 when the clamping ring 30 is moved into its clamping condition.

Figure 7 shows a modification in which longitudinally extending grooves 36 are also provided at spaced intervals around the circumference of the surface 26. The grooves 36 serve the same purpose of providing a space for a accommodating the compressed material.

The arrangements of Figure 6 and 7 are particularly suitable when the bellows is produced by extrusion blow-moulding.

Figure 8 shows a form of the fixing collar 18 in which its internal surface 38 is provided with circumferentially extending ridges 40 and 42, each of which is in alignment with a respective shoulder 44 and 46 which define grooves 48, 50 and 52. Again, these provide spaces for accommodating the compressed material.

Figure 9 shows a modified form of the arrangement of Figure 8 in which the circumferentially extending shoulders 44 and 46 are provided with longitudinally extending grooves 54 and 56 at circumferentially spaced intervals around the fixing collar. Again, these provide spaces for accommodating the compressed material of the fixing collar.

The arrangements shown in Figures 8 and 9 are particularly suitable when the fixing collar is produced by injection blow-moulding.

## Claims

1. A protective bellows made from thermoplastic elastomeric material (14) and having an integral fixing collar adapted to be clamped onto and around the outside of a circumferentially extending relatively rigid mounting surface (16) by clamping means (30) which encircles the collar (18) when positioned on the mounting surface (16) and secures it thereto by compression, characterised in that the fixing collar (18) has a circular internal surface the internal diameter of which is greater than the external diameter of the mounting surface (16).

2. A bellows according to claim 1, characterised in that at least one of the contacting surfaces of the fixing collar (18) and the clamping means (16) is formed with formations of different diameter from the remainder of that surface, the formations (32,34;32,34,36;44,46,48, 50,52;44,46,54,56) providing spaces for accommodating compressed material of the fixing collar (18).

3. A bellows according to claim 2, characterised in that the said formations comprise one or more grooves (32,34;54,56) in the surface of the fixing collar (18).

4. A bellows according to claim 3, characterised in that the grooves include at least one circumferentially extending groove (32,34).

5. A bellows according to claim 3, characterised in that the grooves include at least one longitudinally extending groove (54,56).

6. A bellows according to any one of claims 2 to 5, characterised in that the internal surface of the fixing collar (18) is provided with circumferentially extending lips or ridges (40,42).

7. A bellows according to any one of claims 2 to 6, characterised in that the clamping means (30) is settable either into a first, unclamped, condition in which its internal diameter is relatively great and allows the fixing collar (18) with the clamping means (30) thereon to be positioned around the outside of the mounting surface (16) or into a second, clamped, condition in which its internal diameter compresses the fixing collar (18) onto and around the mounting surface (16), the internal diameter of the clamping means in the clamped position being sufficiently small as to prevent the clamping means (30) being moved into the second condition around the fixing collar (18) when the fixing collar (18) is incorrectly located around a surface (22) which is adjacent to the mounting surface (16) but of greater diameter than the mounting surface (16).

8. A bellows according to claim 7, characterised in that the adjacent surface is the surface of a retaining shoulder (22) circumferentially extending around an edge of the mounting surface (16).

9. A protective bellows moulded from thermoplastic elastomeric material (14) and having an integral fixing collar (18) for fitting onto and around the outside of a relatively rigid circumferentially extending mounting surface (16) having an edge defined by a circumferentially extending shoulder (22) of greater external diameter than the mounting surface (16), and a clamping ring (30) for encirclingly and compressingly holding the fixing collar (18) on the mounting surface (16), characterised in that the clamping ring (30) is settable into either of two stable conditions in which it respectively has different internal diameters, a first one of the conditions providing an internal diameter for the clamping ring (30) such as to allow it and the fixing collar (18) to pass over the shoulder (22) and into position around the mounting surface, and the second one of the conditions providing the clamping ring (30) with an internal diameter which compresses the fixing collar (18) around the mounting surface (16), the internal diameter of the clamping ring (30) in the second condition being too small to enable the fixing collar (18) to be incorrectly compressed around the said shoulder (22).

10. A bellows according to claim 9, characterised in that the internal diameter of the fixing collar (18) is greater than the external diameter of the mounting surface (16).

11. A bellows according to claim 10, characterised in that the internal diameter of the fixing collar (18) is substantially equal to the external diameter of the shoulder (22).

12. A bellows according to claim 10 or 11, characterised in that the material of the fixing collar (18) which is compressed by the clamping ring (30) is formed to define spaces for accommodating part of the compressed material.

13. A bellows according to claim 12, characterised by one or more grooves in the external surface of the fixing collar (18) for providing the said spaces.
